(19) **Europäisches Patentamt / European Patent Office / Office européen des brevets**

(11) **EP 4 156 320 A1**

(12) # EUROPEAN PATENT APPLICATION
published in accordance with Art. 153(4) EPC

(43) Date of publication:
**29.03.2023 Bulletin 2023/13**

(21) Application number: **21809844.0**

(22) Date of filing: **17.05.2021**

(51) International Patent Classification (IPC):
**H01M 4/13** *(2010.01)*      **H01M 4/62** *(2006.01)*
**H01M 10/052** *(2010.01)*      **H01M 10/0562** *(2010.01)*
**H01M 10/0585** *(2010.01)*      **H01B 1/06** *(2006.01)*
**H01B 1/08** *(2006.01)*      **C04B 35/50** *(2006.01)*

(52) Cooperative Patent Classification (CPC):
**C04B 35/50; H01B 1/06; H01B 1/08; H01M 4/13;
H01M 4/62; H01M 10/052; H01M 10/0562;
H01M 10/0585;** Y02E 60/10; Y02P 70/50

(86) International application number:
**PCT/JP2021/018658**

(87) International publication number:
**WO 2021/235401 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.05.2020 JP 2020086795**

(71) Applicant: **Murata Manufacturing Co., Ltd.
Nagaokakyo-shi, Kyoto 617-8555 (JP)**

(72) Inventor: **TAKANO, Ryohei
Nagaokakyo-shi, Kyoto 617-8555 (JP)**

(74) Representative: **Reeve, Nicholas Edward
Reddie & Grose LLP
The White Chapel Building
10 Whitechapel High Street
London E1 8QS (GB)**

(54) **SOLID ELECTROLYTE CERAMIC MATERIAL, AND SOLID BATTERY**

(57)   The present invention provides a solid electrolyte ceramic material having higher ion conductivity and more sufficiently inhibiting Li dendrite growth. The present invention relates to a solid electrolyte ceramic material formed by sintering solid electrolyte particles, the solid electrolyte ceramic material including, at least, lithium (Li), lanthanum (La), bismuth (Bi), and oxygen (O), wherein Bi has a higher concentration in a vicinity of grain boundaries than in a grain interior.

EP 4 156 320 A1

**Description**

TECHNICAL FIELD

The present invention relates to a solid electrolyte ceramic material and a solid-state battery containing the solid electrolyte ceramic material.

BACKGROUND ART

The demand for batteries as power sources for portable electronic devices such as mobile phones and portable personal computers has been greatly expanded in recent years. In batteries used for such applications, an electrolyte (electrolytic solution) such as an organic solvent has been conventionally used as a medium for moving ions.

However, the battery having the above configuration has a risk of leaking of the electrolytic solution, and there is also a problem that an organic solvent or the like used for the electrolytic solution is a combustible substance. Thus, it has been proposed to use a solid electrolyte instead of the electrolytic solution. In addition, development of a sintered-type solid-state secondary battery (so-called "solid-state battery") in which a solid electrolyte is used as an electrolyte and other constituent elements are also composed of a solid has been advanced.

The solid-state battery includes a positive electrode layer, a negative electrode layer, and a solid electrolyte layer stacked between the positive electrode layer and the negative electrode layer. In particular, the solid electrolyte layer contains a solid electrolyte ceramic material, and is responsible for conduction of ions between the positive electrode layer and the negative electrode layer. The solid electrolyte ceramic material is required to have an improved ionic conductivity. As such a solid electrolyte ceramic material, a ceramic material obtained by sintering a garnet-type solid electrolyte in which Bi is present as a solid solution (Patent Document 1) and a ceramic material obtained by sintering a garnet-type solid electrolyte in which Sr and Nb are concentrated in the vicinity of grain boundaries (Non-Patent Document 1) are known.

PRIOR ART DOCUMENTS

PATENT DOCUMENT

Patent Document 1: Japanese Patent Application Laid-Open No. 2015-050071

NON-PATENT DOCUMENT

Non-Patent Document 1: S. Ohta et. al., frontiers in Energy Research (2016) 4, 30

SUMMARY OF THE INVENTION

Problem to be solved by the invention

The inventors of the present invention have found that in a solid-state battery using the conventional solid electrolyte ceramic material as described above, it is extremely difficult to achieve both ion conductivity and Li dendrite growth inhibition property.

Specifically, for example, when high-speed charging is performed in the solid-state battery using the solid electrolyte ceramic material of Patent Document 1, a phenomenon occurred in which Li dendrite grew from the negative electrode layer, and the grown Li dendrite reached the positive electrode layer through the solid electrolyte layer, which caused a short circuit of the solid-state battery. Even when the short circuit phenomenon of the solid electrolyte did not occur, the ion conductivity decreased.

For example, when high-speed charging was performed in the solid-state battery using the solid electrolyte ceramic material of Non-Patent Document 1, a short circuit phenomenon of the solid-state battery because of the growth of Li dendrite from the negative electrode layer also occurred.

The short circuit phenomenon caused by the growth of the Li dendrite is not preferable because it significantly degrade the reliability of the solid-state battery. Thus, from the viewpoint of improving the output and reliability of the solid-state battery, a solid electrolyte ceramic material having high ion conductivity and capable of inhibiting Li dendrite growth is desired.

An object of the present invention is to provide a solid electrolyte ceramic material having higher ion conductivity and more sufficiently inhibiting Li dendrite growth.

Means for solving the problem

The present invention relates to a solid electrolyte ceramic material formed by sintering solid electrolyte particles, the solid electrolyte ceramic material including, at least, lithium (Li), lanthanum (La), bismuth (Bi), and oxygen (O), wherein Bi has a higher concentration in a vicinity of grain boundaries than in a grain interior.

Advantageous effect of the invention

The solid electrolyte ceramic material of the present invention has sufficiently high ion conductivity and more sufficiently inhibit Li dendrite growth.

BRIEF EXPLANATION OF DRAWINGS

FIG. 1 is an enlarged schematic view of a solid electrolyte ceramic material of the present invention for explaining a sintered grain constituting the solid electrolyte ceramic material and the structure thereof.
FIG. 2 is an enlarged schematic view of a solid electrolyte ceramic material of the present invention for explaining the mechanism of the Li dendrite growth inhibition effect exhibited by the solid electrolyte ceramic material.

MODE FOR CARRYING OUT THE INVENTION

[Solid electrolyte ceramic material]

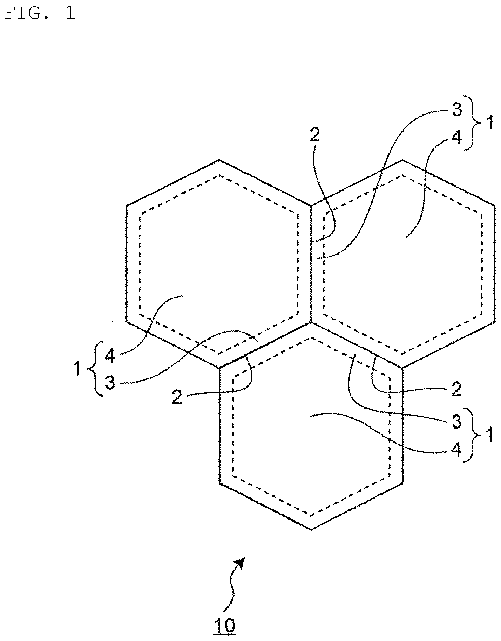

The solid electrolyte ceramic material of the present invention includes a sintered body formed by sintering solid electrolyte particles. The solid electrolyte ceramic material of the present invention contains at least lithium (Li), lanthanum (La), bismuth (Bi), and oxygen (O), and preferably further contains zirconium (Zr) from the viewpoint of further improving the ion conductivity and further inhibiting Li dendrite growth. In each sintered grain of the solid electrolyte ceramic material of the present invention, Bi has a higher concentration in a vicinity of grain boundaries than in a grain interior. Specifically, as illustrated in FIG. 1, a solid electrolyte ceramic material 10 of the present invention is composed of a plurality of sintered grains 1, and in each of the sintered grains 1, the Bi concentration in a vicinity 3 of grain boundaries close to a grain boundary 2 is higher than the Bi concentration in a grain interior 4 surrounded by the vicinity 3 of grain boundaries. FIG. 1 is an enlarged schematic view of the solid electrolyte ceramic material of the present invention for explaining the sintered grain constituting the solid electrolyte ceramic material and the structure thereof. In FIG. 1, only three sintered grains 1 are illustrated, but usually many sintered grains are present around them while forming grain boundaries with the sintered grains adjacent to each other.

The solid electrolyte ceramic material of the present invention can more sufficiently inhibit Li dendrite growth while more sufficiently maintaining high ion conductivity with relatively increased Bi concentration in the vicinity of grain boundaries as described above. Details of the phenomenon in which such an effect is exhibited are not clear, but it is considered that the phenomenon is based on the following mechanism.

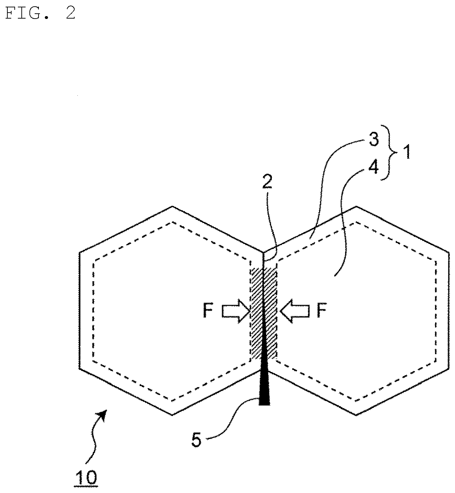

When a Li dendrite is generated, a Li dendrite 5 grows through the grain boundary 2 of the solid electrolyte ceramics (in particular, between the sintered grains of the ceramics) as illustrated in FIG. 2. In the solid electrolyte ceramic material 10 of the present invention, Bi is present in a pentavalent form. When the Li dendrite 5 is generated at the grain boundary 2 and grows, the pentavalent Bi in the vicinity 3 of grain boundaries of the solid electrolyte ceramic material 10 is reduced to trivalent due to contact with the Li dendrite, and its ionic radius increases. At this time, the lattice constant of the vicinity 3 of grain boundaries increases as the ionic radius of Bi increases in the vicinity 3 of grain boundaries. In this manner, the lattice volume of the vicinity 3 of grain boundaries in the solid electrolyte ceramic material increases and expands, which causes a compressive stress F to work on the grain boundary 2 and to sufficiently inhibit the Li dendrite 5 from growing. On the other hand, in the solid electrolyte ceramic material, when the solid solution amount of Bi increases, the ion conductivity tends to decrease. In the present invention, since the Bi concentration in the vicinity 3 of grain boundaries is higher than the Bi concentration in the grain interior 4, in other words, since the Bi concentration is relatively low in the grain interior 4, it is possible to more sufficiently maintain high ionic conductivity while sufficiently inhibiting dendrite growth. FIG. 2 is an enlarged schematic view of the solid electrolyte ceramic material for explaining the mechanism of the Li dendrite growth inhibition effect exhibited by the solid electrolyte ceramic material of the present invention. In FIG. 2, only two sintered grains 1 are illustrated, but usually many sintered grains are present around them while forming grain boundaries with the sintered grains adjacent to each other.

The vicinity 3 of grain boundaries is a region (that is, the region near grain boundaries) in which the distance from the grain boundary 2 (that is, the distance from the grain boundary 2 toward the grain interior 4) is 50 nm or less.

Thus, the vicinity 3 of grain boundaries is disposed at the outer edge of the sintered grain (for example, in a sectional view) and surrounds the grain interior 4 described later.

The Bi concentration of the vicinity 3 of grain boundaries is an average Bi amount ($x_1$) in the region near grain boundaries as described above. In the present specification, 10 points in the vicinity 3 of grain boundaries are subjected to point analysis using TEMEDX (energy dispersive X-ray spectroscopy), and an average value thereof is used as the Bi concentration in the vicinity 3 of grain boundaries. Specifically, in each of any 10 sintered grains, composition analysis was performed by point analysis at any 10 points in the vicinity 3 of grain boundaries to obtain a Bi/M ratio. The Bi amount x in the general formula (I) described later is calculated from the Bi/M ratio, and the average value thereof is used. The vicinity 3 of grain boundaries of one sintered grain forms the grain boundary 2 between the vicinity 3 of grain boundaries of one or more sintered grains adjacent to the one sintered grain.

The grain interior 4 is a region where the distance from the grain boundary 2 (that is, the distance from the grain boundary 2 toward the grain interior 4) is more than 50 nm. Specifically, the grain interior 4 is an inner region surrounded by the vicinity 3 of grain boundaries (for example, in sectional view).

The Bi concentration of the grain interior 4 is an average Bi amount ($x_2$) in the grain interior 4 as described above. In the present specification, as the Bi concentration of the grain interior 4, 10 points in the grain interior 4 are subjected to point analysis using TEM-EDX (energy dispersive X-ray spectroscopy), and an average value thereof is used. Specifically, in each of any 10 sintered grains, composition analysis was performed by point analysis at any 10 points in the grain interior 4 to obtain a Bi/M ratio. The Bi amount x in the general formula (I) described later is calculated from the Bi/M ratio, and the average value thereof is used.

The solid electrolyte ceramic material of the present invention has a garnet-type crystal structure. That is, the solid electrolyte ceramic material of the present invention has a garnet-type crystal structure in the vicinity 3 of grain boundaries and the grain interior 4 in each sintered grain as a whole.

The solid electrolyte ceramic material having a garnet-type structure means that the ceramic material has a garnet-type crystal structure, and in a broad sense, it means that the ceramic material has a crystal structure that may be recognized as a garnet-type crystal structure by a person skilled in the field of solid-state batteries. In a narrow sense, the solid electrolyte ceramic material having a garnet-type structure means that the ceramic material exhibits one or more main peaks corresponding to Miller indices unique to a so-called garnet-type crystal structure at a predetermined incident angle in X-ray diffraction.

In the present invention, in the solid electrolyte ceramic material having a garnet-type crystal structure, Bi occupies the six-coordination site in the garnet-type crystal structure. In the present invention, when twice an amount of a molar ratio of Bi in the six-coordination site is defined as a Bi amount x, a relational expression shown below is satisfied:

$$x_2 < x_1$$

where $x_2$ is the Bi amount x in the vicinity 3 of grain boundaries and $x_2$ is the Bi amount x in the grain interior 4.

The six-coordination site in the garnet-type crystal structure of the present invention refers to, for example, a site occupied by Nb in $Li_5La_3Nb_2O_{12}$ (ICDD Card No. 00-045-0109) having the garnet-type crystal structure, and a site occupied by Zr in the garnet-type crystal structure $Li_7La_3Zr_2O_{12}$ (ICDD Card. No 01-078-6708).

The Bi amount $x_1$ in the vicinity 3 of grain boundaries and the Bi amount $x_2$ in the grain interior 4 preferably satisfy the relational expressions of the following Embodiment p1, more preferably the relational expressions of the following Embodiment p2, still more preferably the relational expressions of the following Embodiment p3, and particularly preferably the relational expressions of the following Embodiment p4 from the viewpoint of further improving the ion conductivity and further inhibiting Li dendrite growth.

Embodiment p1:

$$0 < x_1 \leq 0.80;$$

and

$$0 \leq x_2 \leq 0.30.$$

Embodiment p2:

$$0.05 \leq x_1 \leq 0.60;$$

and

$$0.01 \leq x_2 \leq 0.25.$$

Embodiment p3:

$$0.05 \leq x_1 \leq 0.20;$$

and

$$0.03 \leq x_2 \leq 0.07.$$

Embodiment p4:

$$0.11 \leq x_1 \leq 0.17;$$

and

$$0.03 \leq x_2 \leq 0.05.$$

The Bi amount $x_2$ in the vicinity 3 of grain boundaries and the Bi amount $x_2$ in the grain interior 4 preferably satisfy the relational expression of the following Embodiment q1, more preferably the relational expression of the following Embodiment q2, still more preferably the relational expression of the following Embodiment q3, and particularly preferably the relational expression of the following Embodiment q4 from the viewpoint of further improving the ion conductivity and further inhibiting Li dendrite growth.

Embodiment q1:

$$0.01 \leq x_1 - x_2.$$

Embodiment q2:

$$0.01 \leq x_1 - x_2 \leq 0.40.$$

Embodiment q3:

$$0.02 \leq x_1 - x_2 \leq 0.11.$$

Embodiment q4:

$$0.08 \leq x_1 - x_2 \leq 0.11.$$

The solid electrolyte ceramic material of the present invention usually has, as a whole of the material, an average chemical composition represented by the general formula (I).

[Chemical Formula 1] $(Li_{[7-ay-(b-4)(2-x)-x+(3-c)z]}A_y) (La_{3-z}C_z) (M_{2-x}Bi_x) O_{12}$ ( I )

That is, the solid electrolyte ceramic material has an average chemical composition represented by the general formula (I) as the whole of the vicinity 3 of grain boundaries and the grain interior 4 in each sintered grain.

In the formula (I), A is one or more elements selected from the group consisting of gallium (Ga), aluminum (Al), magnesium (Mg), zinc (Zn), and scandium (Sc). A is preferably one or more elements selected from the group consisting of gallium (Ga) and aluminum (Al), and more preferably two elements of Ga and Al from the viewpoint of further improving the ion conductivity and further inhibiting Li dendrite growth.

In the formula (I), M is a metal ion occupying the six-coordination site in the garnet-type crystal structure. In particular, M is preferably one or more elements selected from the group consisting of zirconium (Zr), tantalum (Ta), niobium (Nb), molybdenum (Mo), tungsten (W), and tellurium (Te). M preferably contains zirconium (Zr), more preferably is zirconium (Zr), and still more preferably is only zirconium (Zr) from the viewpoint of further improving the ion conductivity and further inhibiting Li dendrite growth.

In the formula (I), x satisfies $0 < x \leq 0.5$, and preferably satisfies $0.02 \leq x \leq 0.40$, more preferably $0.02 \leq x \leq 0.30$, still more preferably $0.04 \leq x \leq 0.20$, and particularly preferably $0.04 \leq x \leq 0.10$ from the viewpoint of further improving the ion conductivity and further inhibiting Li dendrite growth,

y satisfies $0 \leq y \leq 0.5$, and preferably satisfies $0 \leq y \leq 0.4$, more preferably $0 \leq y \leq 0.30$, still more preferably $0 \leq y \leq 0.30$, and particularly preferably $0 \leq y \leq 0.25$ from the viewpoint of further improving the ion conductivity and further inhibiting Li dendrite growth,

C is one or more elements selected from the group consisting of calcium (Ca), strontium (Sr), barium (Ba), and lanthanoid elements,

z satisfies $0 < z \leq 2$, and preferably satisfies $0 \leq z \leq 0.30$, and more preferably $0 \leq z \leq 0.10$ from the viewpoint of further improving the ion conductivity and further inhibiting Li dendrite growth, and

a is an average valence of A. The average valence of A is, for example, a value represented by $(n1 \times a + n2 \times b + n3 \times c)/(n1 + n2 + n3)$ when A is recognized as n1 of elements X having a valence a+, n2 of elements Y having a valence b+, and n3 of elements Z having a valence c+.

b is an average valence of M. The average valence of M is, for example, the same value as the average valence of A described above when M is recognized as n1 of elements X having a valence a+, n2 of elements Y having a valence b+, and n3 of elements Z having a valence c+.

c is an average valence of C. The average valence of C is, for example, the same value as the average valence of A described above when C is recognized as n1 of elements X having a valence a+, n2 of elements Y having a valence b+, and n3 of elements Z having a valence c+.

In the present invention, as the average chemical composition of the solid electrolyte ceramic material, the composition of the whole ceramic may be determined using inductively coupled plasma (ICP). Alternatively, it may be obtained by performing quantitative analysis (composition analysis) at any 100 points of each of any 100 sintered grains using TEM-EDX (energy dispersive X-ray spectroscopy) and calculating the average value thereof.

Bi contained in the solid electrolyte ceramic material of the present invention is preferably present as a solid solution in the garnet-type solid electrolyte. When the Bi component does not form a solid solution in the garnet-type solid electrolyte and forms the second phase, Bi metal tends to be produced through reduction due to contact with Li metal. When Bi metal is produced, electron conductivity tends to occur, leading to an increase in leak current of the solid-state battery. The production of Bi metal can be inhibited by causing Bi to form in a solid solution in the garnet-type solid electrolyte in an appropriate range. From the above viewpoint, in the solid electrolyte ceramic material used in the present invention, it is preferable that the garnet-type solid electrolyte grains are directly bonded to each other.

The average grain size of the sintered grains constituting the solid electrolyte ceramic material is usually more than 100 nm and 100 um or less, particularly 200 nm or more and 10 um or less.

The average grain size of the sintered grains is an average grain size of the sintered grains whose outer edge is defined by a grain boundary.

In the present specification, as the average grain size of the sintered grains, an average value of any 100 grains obtained by performing grain analysis using a TEM image and image analysis software (for example, "Azo-kun" (manufactured by Asahi Kasei Engineering Corporation) and calculating the equivalent circle diameter is used.

[Method for Producing Solid Electrolyte Ceramic Material]

The solid electrolyte ceramic material of the present invention may be obtained by sintering Bi-free solid electrolyte particles as core particles and a Bi-containing solid electrolyte layer as a shell layer present around the Bi-free solid electrolyte particles. Specifically, the solid electrolyte ceramic material may be obtained by element-diffusing Bi from the shell layer to the core particles. More specifically, the solid electrolyte ceramic material of the present invention may be obtained by producing a slurry containing core particles, a shell layer, a solvent, and a binder, forming the slurry into a sheet, then burning and removing the binder, and thereafter sintering the obtained material. The slurry may include a sintering aid as desired. The above production method is an example of obtaining the solid electrolyte ceramic material of the present invention, and the solid electrolyte ceramic material may be produced by other production methods. The effect of the present invention can be obtained by any method as long as the solid electrolyte ceramic material contains at least lithium (Li), lanthanum (La), bismuth (Bi), and oxygen (O), and the Bi concentration in the vicinity of grain boundaries is higher than the Bi concentration of the grain interior.

The core particles are Bi-free solid electrolyte particles, and for example, particles composed of a solid electrolyte having a garnet-type crystal structure and not containing Bi are used. As the core particles, a solid electrolyte having a garnet-type crystal structure containing Bi may be used as long as the solid electrolyte ceramic material of the present invention described above can be obtained. Examples of the solid electrolyte used as the core particles include the same materials as that of the solid electrolyte having the average chemical composition represented by the general formula (I) described above except that x is within the range of $0 \leq x < 0.5$. In the solid electrolyte, x is preferably in the same range as $x_2$ in the Embodiments p1 to p4 described above.

Specific examples of the solid electrolyte constituting the core particles include $(Li_{6.4}Ga_{0.05}Al_{0.15})La_3Zr_2O_{12}$, $Li_{6.6}La_3(Zr_{1.6}Ta_{0.4})O_{12}$, $Li_{6.75}La_3(Zr_{1.75}Nb_{0.25})O_{12}$, and $Li_{6.6}La_3(Zr_{1.8}Mo_{0.2})O_{12}$.

The average particle size of the core particles is usually more than 50 nm and 100 um or less, particularly 200 nm or more and 10 um or less.

In the present specification, as the average particle size of the core particles, a value measured by the same measurement method as in the case of the average grain size of the sintered grains is used.

The shell layer is a Bi-containing solid electrolyte layer, and is, for example, a layer composed of a solid electrolyte having a garnet-type crystal structure containing Bi. Examples of such a solid electrolyte include the same materials as that of the solid electrolyte having the average chemical composition represented by the general formula (I) except that x is in the same range as $x_1$ in the Embodiments p1 to p4 described above.

Specific examples of the solid electrolyte constituting the shell layer include

$$(Li_{6.05}Ga_{0.05}Al_{0.15})La_3(Zr_{1.65}Bi_{0.35})O_{12},$$

$$(Li_{5.95}Ga_{0.05}Al_{0.15})La_3(Zr_{1.45}Bi_{0.55})O_{12},$$

$$(Li_{5.95}Ga_{0.05}Al_{0.15})La_3(Zr_{1.45}Bi_{0.55})O_{12},$$

$$(Li_{6.2}Ga_{0.05}Al_{0.15})La_3(Zr_{1.8}Bi_{0.2})O_{12},$$

$$Li_{6.4}La_3(Zr_{1.4}Ta_{0.4}Bi_{0.2})O_{12},$$

$$Li_{6.55}La_3(Zr_{1.55}Nb_{0.25}Bi_{0.2})O_{12},$$

and

$Li_{6.4}La_3(Zr_{1.6}MO_{0.2}Bi_{0.2})O_{12}$.

The average film thickness of the shell layer is usually more than 10 nm and 10 um or less, particularly 20 nm or more and 1 um or less.

In the present specification, the average film thickness of the shell layer may be calculated by performing TEM measurement of core particles having the shell layer, measuring the film thickness of the shell layer at any 20 points, and averaging the values.

The content of the shell layer in the slurry is not particularly limited as long as the solid electrolyte ceramic material of the present invention may be obtained, and may be, for example, 1 mol% or more and 70 mol% or less, particularly 10 mol% or more and 50 mol% or less with respect to 100 mol% of the core particles, and is preferably 20 mol% or more and 40 mol% or less from the viewpoint of further improving the ion conductivity and further inhibiting Li dendrite growth.

The solvent is not particularly limited, and for example, a solvent that may be used for producing a positive electrode layer, a negative electrode layer, or a solid electrolyte layer in the field of solid-state batteries is used. As the solvent, a solvent capable of using the binder described later is usually used. Examples of such a solvent include alcohols such as 2-propanol.

The binder is not particularly limited, and for example, a binder that may be used for producing a positive electrode layer, a negative electrode layer, or a solid electrolyte layer in the field of solid-state batteries is used. Examples of such a binder include a butyral resin and an acrylic resin.

As a sintering aid that may be included in the solid electrolyte ceramic material, any sintering aid known in the field of solid-state batteries may be used. The composition of such a sintering aid contains at least lithium (Li), boron (B), and oxygen (O), and the molar ratio of Li to B (Li/B) is preferably 2.0 or more. Specific examples of such a sintering aid include $Li_3BO_3$, $(Li_{2.7}Al_{0.3})BO_3$, $Li_{2.8}(B_{0.8}C_{0.2})O_3$, and $LiBO_2$.

When a sintering aid is contained, the content of the sintering aid is preferably as small as possible from the viewpoint of elemental diffusion of Bi, and is preferably 0% or more and 10% or less, particularly 0% or more and 5% or less with respect to the volume ratio of the garnet-type solid electrolyte.

The sintering conditions are not particularly limited as long as the solid electrolyte ceramic material of the present invention may be obtained. For example, when the sintering conditions are too strong, the amount of Bi inside the grains becomes too high, and it is not possible to obtain the solid electrolyte ceramic material of the present invention. For example, when the sintering conditions are too weak, elemental diffusion of Bi from the shell layer to the core particles does not occur, and it is not possible to obtain the solid electrolyte ceramic material of the present invention. The sintering temperature may be, for example, 600°C or more and 1100°C or less, particularly may be 700°C or more and 950°C or less. The sintering time may be, for example, 10 minutes or more and 1440 minutes or less, particularly may be 60 minutes or more and 600 minutes or less.

[Solid-state battery]

The "solid-state battery" in the present specification refers to a battery whose constituent elements (especially electrolyte layers) are formed of solids in a broad sense and refers to an "all-solid-state battery" whose constituent elements (especially all constituent elements) are formed of solids in a narrow sense. The "solid-state battery" in the present specification encompasses a so-called "secondary battery" that can be repeatedly charged and discharged and a "primary battery" that can only be discharged. The "solid-state battery" is preferably a "secondary battery". The "secondary battery" is not excessively limited by its name, and may encompass, for example, an electrochemical device such as a "power storage device".

The solid-state battery of the present invention includes a positive electrode layer, a negative electrode layer, and a solid electrolyte layer, and usually has a stacked structure in which the positive electrode layer and the negative electrode layer are stacked with the solid electrolyte layer interposed therebetween. Each of the positive electrode layer and the negative electrode layer may be stacked in two or more layers as long as a solid electrolyte layer is provided therebetween. The solid electrolyte layer is in contact with and sandwiched between the positive electrode layer and the negative electrode layer. The positive electrode layer and the solid electrolyte layer may be integrally sintered with each other as sintered bodies, and/or the negative electrode layer and the solid electrolyte layer may be integrally sintered with each other as sintered bodies. Being integrally sintered with each other as sintered bodies means that two or more members (in particular, layers) adjacent to or in contact with each other are joined by sintering. Here, the two or more members (in particular, layers) may be integrally sintered while they are sintered bodies.

The solid electrolyte ceramic material of the present invention described above is useful as a solid electrolyte of a solid-state battery. Thus, the solid-state battery of the present invention contains the solid electrolyte ceramic material of the present invention described above as a solid electrolyte. Specifically, the solid electrolyte ceramic material of the present invention is contained as a solid electrolyte in at least one layer selected from the group consisting of a positive electrode layer, a negative electrode layer, and a solid electrolyte layer. The solid electrolyte ceramic material of the present invention is preferably contained in at least the solid electrolyte layer from the viewpoint of further improving the ion conductivity and further inhibiting Li dendrite growth.

(Positive Electrode Layer)

In the solid-state state battery of the present invention, the positive electrode layer is not particularly limited. For example, the positive electrode layer contains a positive electrode active material and may further contain the solid electrolyte ceramic material of the present invention. When the solid electrolyte of the present invention is contained in the positive electrode layer, it is possible to prevent Li dendrite from reaching the positive electrode active material and causing the solid-state battery to have a short circuit. The positive electrode layer preferably has a form of a sintered body containing positive electrode active material particles. The positive electrode layer is preferably a layer capable of occluding and releasing ions (in particular, lithium ions).

The positive electrode active material is not particularly limited, and a positive electrode active material known in the field of solid-state batteries may be used. Examples of the positive electrode active material include lithium-containing phosphoric acid compound particles having a NASICON-type structure, lithium-containing phosphoric acid compound particles having an olivine-type structure, lithium-containing layered oxide particles, and lithium-containing oxide particles having a spinel-type structure. Specific examples of the lithium-containing phosphoric acid compound having a NASICON-type structure that is preferably used include $Li_3V_2(PO_4)_3$. Specific examples of the lithium-containing phosphoric acid compound having an olivine-type structure that is preferably used include $Li_3Fe_2(PO_4)_3$ and $LiMnPO_4$. Specific examples of the lithium-containing layered oxide particles that is preferably used include $LiCoO_2$ and $LiCo_{1/3}Ni_{1/3}Mn_{1/3}O_2$. Specific examples of the lithium-containing oxide having a spinel-type structure that is preferably used include $LiMn_2O_4$, $LiNi_{0.5}Mn_{1.5}O_4$, and $Li_4Ti_5O_{12}$. From the viewpoint of reactivity during co-sintering with the LISICON-type solid electrolyte used in the present invention, a lithium-containing layered oxide such as $LiCoO_2$ or $LiCo_{1/3}Ni_{1/3}Mn_{1/3}O_2$ is more preferably used as the positive electrode active material. Only one type of these positive electrode active material particles may be used, or a plurality of types thereof may be mixed and used.

The positive electrode active material having a NASICON-type structure in the positive electrode layer means that the positive electrode active material (in particular, its particles) have a NASICON-type crystal structure, and in a broad sense, it means that the positive electrode active material has a crystal structure that may be recognized as a NASICON-type crystal structure by a person skilled in the art of solid-state state batteries. In a narrow sense, the positive electrode active material having a NASICON-type structure in the positive electrode layer means that the positive electrode active material (in particular, its particles) exhibits one or more main peaks corresponding to Miller indices unique to a so-called NASICON-type crystal structure at a predetermined incident angle in X-ray diffraction. Examples of the positive electrode active material having a NASICON-type structure that is preferably used include the compounds exemplified above.

The positive electrode active material having an olivine-type structure in the positive electrode layer means that the positive electrode active material (in particular, its particles) has an olivine-type crystal structure, and in a broad sense, it means that the positive electrode active material has a crystal structure that may be recognized as an olivine-type crystal structure by a person skilled in the art of solid-state batteries. In a narrow sense, the positive electrode active material having an olivine-type structure in the positive electrode layer means that the positive electrode active material (in particular, its particles) exhibits one or more main peaks corresponding to Miller indices unique to a so-called olivine-type crystal structure at a predetermined incident angle in X-ray diffraction. Examples of the positive electrode active material having an olivine-type structure that is preferably used include the compounds exemplified above.

The positive electrode active material having a spinel-type structure in the positive electrode layer means that the positive electrode active material (in particular, its particles) has a spinel-type crystal structure, and in a broad sense, it means that the positive electrode active material has a crystal structure that may be recognized as a spinel-type crystal structure by those skilled in the art of solid-state batteries. In a narrow sense, the positive electrode active material having a spinel-type structure in the positive electrode layer means that the positive electrode active material (in particular, its particles) exhibits one or more main peaks corresponding to Miller indices unique to a so-called spinel-type crystal structure at a predetermined incident angle in X-ray diffraction. Examples of the positive electrode active material having a spinel-type structure that is preferably used include the compounds exemplified above.

The chemical composition of the positive electrode active material may be an average chemical composition. The average chemical composition of the positive electrode active material means an average value of the chemical compositions of the positive electrode active material in the thickness direction of the positive electrode layer. The average chemical composition of the positive electrode active material may be analyzed and measured by breaking the solid-state battery and performing composition analysis by EDX using SEM-EDX (energy dispersive X-ray spectroscopy) in a field of view in which the whole positive electrode layer fits in the thickness direction.

The positive electrode active material may be produced, for example, by the following method, or may be obtained as a commercially available product. In producing a positive electrode active material, first, a raw material compound containing a predetermined metal atom is weighed to have a predetermined chemical composition, and water is added and mixed to obtain a slurry. Next, the slurry is dried, calcined at 700°C or more and 1000°C or less for 1 hour or more and 30 hours or less, and pulverized, whereby a positive electrode active material may be obtained.

The chemical composition and crystal structure of the positive electrode active material in the positive electrode layer may be usually changed by element diffusion during sintering. The positive electrode active material preferably has the chemical composition and crystal structure described above in the solid-state battery after being sintered together with the negative electrode layer and the solid electrolyte layer.

The average particle size of the positive electrode active material is not particularly limited, and may be, for example, 0.01 um or more and 10 um or less, and preferably 0.05 um or more and 4 um or less.

As the average particle size of the positive electrode active material, for example, 10 or more and 100 or less particles are randomly selected from the SEM image, and the particle sizes thereof may be simply averaged to determine the average particle size (arithmetic average).

The particle size is the diameter of a spherical particle when the particle is assumed to be a perfect sphere. For such a particle size, for example, a section of the solid-state battery is cut out, a sectional SEM image is photographed using an SEM, the sectional area S of the particle is calculated using image analysis software (for example, "Azo-kun" (manufactured by Asahi Kasei Engineering Corporation)), and then the particle diameter R may be determined by the following formula.

[Mathematical Formula 1]

$$R = 2 \times (S / \pi)^{1/2}$$

The average particle size of the positive electrode active material in the positive electrode layer may be automatically measured by specifying the positive electrode active material according to the composition at the time of measuring the average chemical composition described above.

Usually, the average particle size of the positive electrode active material in the positive electrode layer may change due to sintering in the process of producing the solid-state battery. The positive electrode active material preferably has the average particle size described above in the solid-state battery after being sintered together with the negative electrode layer and the solid electrolyte layer.

The proportion by volume of the positive electrode active material in the positive electrode layer is not particularly limited, and may be, for example, 30% or more and 90% or less, and particularly 40% or more and 70% or less.

The positive electrode layer may contain the solid electrolyte ceramic material of the present invention as a solid electrolyte, and/or may contain a solid electrolyte other than the solid electrolyte ceramic material of the present invention.

The positive electrode layer may further contain a sintering aid and/or a conductive material.

When the positive electrode layer contains the solid electrolyte ceramic material of the present invention, the proportion by volume of the solid electrolyte ceramic material of the present invention may be usually 20% or more and 60% or less, and particularly 30% or more and 45% or less.

As the sintering aid in the positive electrode layer, the same compound as the sintering aid that may be contained in the solid electrolyte ceramic material may be used.

The proportion by volume of the sintering aid in the positive electrode layer is not particularly limited, and is preferably 0.1% or more and 20% or less, and more preferably 1% or more and 10% or less, from the viewpoint of further improving the ion conductivity and further inhibiting Li dendrite growth.

As the conductive material in the positive electrode layer, a conductive material known in the field of solid-state batteries may be used. Examples of the conductive material preferably used from the viewpoint of further improving ion conductivity and further inhibiting Li dendrite growth include metal materials such as silver (Ag), gold (Au), palladium (Pd), platinum (Pt), copper (Cu), tin (Sn), and nickel (Ni); and carbon materials such as carbon nanotubes for example acetylene black, Ketjen black, Super P (registered trademark), and VGCF (registered trademark). The shape of the carbon material is not particularly limited, and any shape such as a spherical shape, a plate shape, and a fibrous shape may be used.

The proportion by volume of the conductive material in the positive electrode layer is not particularly limited, and is preferably 10% or more and 50% or less, and more preferably 20% or more and 40% or less, from the viewpoint of further improving the ion conductivity and further inhibiting Li dendrite growth.

The thickness of the positive electrode layer is usually 0.1 to 30 um, and is preferably 1 to 20 um from the viewpoint of further improving the ion conductivity and further inhibiting Li dendrite growth. As the thickness of the positive electrode layer, an average value of thicknesses measured at any 10 points in an SEM image is used.

In the positive electrode layer, the porosity is not particularly limited, and is preferably 20% or less, more preferably 15% or less, and still more preferably 10% or less from the viewpoint of further improving the ion conductivity and further inhibiting Li dendrite growth.

As the porosity of the positive electrode layer, a value measured from an SEM image after FIB section processing is used.

The positive electrode layer is a layer that may be referred to as a "positive electrode active material layer". The positive electrode layer may have a so-called positive electrode current collector or a positive electrode current collecting layer.


(Negative electrode layer)

In the solid-state battery of the present invention, the negative electrode layer is not particularly limited. For example, the negative electrode layer contains a negative electrode active material and may further contain the solid electrolyte ceramic material of the present invention. When the solid electrolyte of the present invention is contained in the negative electrode layer, it is possible to prevent Li dendrite generated from the negative electrode active material from growing into the solid electrolyte layer and causing the solid-state battery to have a short circuit. The negative electrode layer preferably has a form of a sintered body containing negative electrode active material particles. The negative electrode layer is preferably a layer capable of occluding and releasing ions (in particular, lithium ions).

The negative electrode active material is not particularly limited, and a negative electrode active material known in the field of solid-state batteries may be used. The Li dendrite may be generated on the surface of the negative electrode active material during charging and discharging at a low temperature and a high rate not only when lithium metal is used as the negative electrode active material but also when a negative electrode active material in which charging and discharging proceeds through intercalation is used. Thus, containing the solid electrolyte of the present invention in the negative electrode layer can inhibit the Li dendrite generated from the negative electrode active material from growing into the solid electrolyte layer. Examples of the negative electrode active material include carbon materials such as graphite, graphite-lithium compounds, lithium metal, lithium alloy particles, phosphate compounds having a NASICON-type structure, Li-containing oxides having a spinel-type structure, and oxides having a $\beta_{II}$-$Li_3VO_4$-type structure and a $\gamma_{II}$-$Li_3VO_4$-type structure. As the negative electrode active material, it is preferable to use lithium metal or a Li-containing oxide having a $\beta_{II}$-$Li_3VO_4$-type structure or a $\gamma_{II}$-$Li_3VO_4$-type structure.

The oxide having a $\beta_{II}$-$Li_3VO_4$-type structure in the negative electrode layer means that the oxide (in particular, its particles) has a $\beta_{II}$-$Li_3VO_4$-type crystal structure, and in a broad sense, it means that the oxide has a crystal structure that may be recognized as a $\beta_{II}$-$Li_3VO_4$-type crystal structure by a person skilled in the art of solid-state batteries. In a narrow sense, the oxide having a $\beta_{II}$-$Li_3VO_4$-type structure in the negative electrode layer means that the oxide (in particular, its particles) exhibits one or more main peaks corresponding to Miller indices unique to a so-called $\beta_{II}$-$Li_3VO_4$-type crystal structure at a predetermined incident angle in X-ray diffraction. Examples of the Li-containing oxide having a $\beta_{II}$-$Li_3VO_4$-type structure preferably used include $Li_3VO_4$.

The oxide having a $\gamma_{II}$-$Li_3VO_4$-type structure in the negative electrode layer means that the oxide (in particular, its particles) has a $\gamma_{II}$-$Li_3VO_4$-type crystal structure, and in a broad sense, it means that the oxide has a crystal structure that may be recognized as a $\gamma_{II}$-$Li_3VO_4$-type crystal structure by a person skilled in the art of solid-state batteries. In a narrow sense, the oxide having a $\gamma_{II}$-$Li_3VO_4$-type structure in the negative electrode layer means that the oxide (in particular, its particles) exhibits one or more main peaks corresponding to Miller indices unique to a so-called $\gamma_{II}$-$Li_3VO_4$-type crystal structure at a predetermined incident angle (x-axis) in X-ray diffraction. Examples of the Li-containing oxide having a $\gamma_{II}$-$Li_3VO_4$-type structure preferably used include $Li_{3.2}V_{0.8}Si_{0.2}O_4$.

The chemical composition of the negative electrode active material may be an average chemical composition. The average chemical composition of the negative electrode active material means an average value of the chemical compositions of the negative electrode active material in the thickness direction of the negative electrode layer. The average chemical composition of the negative electrode active material may be analyzed and measured by breaking the solid-state battery and performing composition analysis by EDX using SEM-EDX (energy dispersive X-ray spectroscopy) in a field of view in which the whole negative electrode layer fits in the thickness direction.

The negative electrode active material may be produced, for example, by the same method as the positive electrode active material or may be obtained as a commercially available product.

Usually, the chemical composition and crystal structure of the negative electrode active material in the negative electrode layer may be changed by element diffusion during sintering in the production process of the solid-state battery. The negative electrode active material preferably has the chemical composition and crystal structure described above in the solid-state battery after being sintered together with the positive electrode layer and the solid electrolyte layer.

The proportion by volume of the negative electrode active material in the negative electrode layer is not particularly limited and is preferably 50% or more (particularly 50% 99% or less), more preferably 70% or more and 95% or less, and still more preferably 80% or more and 90% or less, from the viewpoint of further improving the ion conductivity and further inhibiting Li dendrite growth.

The negative electrode layer may contain the solid electrolyte ceramic material of the present invention as a solid electrolyte, and/or may contain a solid electrolyte other than the solid electrolyte ceramic material of the present invention.

The negative electrode layer may further contain a sintering aid and/or a conductive material.

When the negative electrode layer contains the solid electrolyte ceramic material of the present invention, the proportion by volume of the solid electrolyte ceramic material of the present invention may be usually 20% or more and 60% or less, and particularly 30% or more and 45% or less.

As the sintering aid in the negative electrode layer, the same compound as the sintering aid in the positive electrode layer may be used.

As the conductive material in the negative electrode layer, the same compound as the conductive material in the positive electrode layer may be used.

The thickness of the negative electrode layer is usually 0.1 to 30 um and is preferably 1 to 20 um from the viewpoint of further improving the ion conductivity and further inhibiting Li dendrite growth. As the thickness of the negative electrode layer, an average value of thicknesses measured at any 10 points in an SEM image is used.

In the negative electrode layer, the porosity is not particularly limited, and is preferably 20% or less, more preferably 15% or less, and still more preferably 10% or less from the viewpoint of further improving the ion conductivity and further inhibiting Li dendrite growth.

As the porosity of the negative electrode layer, a value measured by the same method as the porosity of the positive electrode layer is used.

The negative electrode layer is a layer that may be referred to as a "negative electrode active material layer". The negative electrode layer may have a so-called negative electrode current collector or a negative electrode current collecting layer.

(Solid Electrolyte Layer)

In the solid-state battery of the present invention, the solid electrolyte layer preferably contains the solid electrolyte ceramic material of the present invention described above from the viewpoint of further improving the ion conductivity and further inhibiting Li dendrite growth.

The proportion by volume of the solid electrolyte ceramic material of the present invention in the solid electrolyte layer is not particularly limited, and is preferably 10% or more and 100% or less, more preferably 20% or more and 100% or less, and still more preferably 30% or more and 100% or less, from the viewpoint of further improving the ion conductivity and further inhibiting Li dendrite growth.

The proportion by volume of the solid electrolyte ceramic material of the present invention in the solid electrolyte layer may be measured by the same method as in the case of the proportion by volume of the positive electrode active material.

In addition to the garnet-type solid electrolyte, the solid electrolyte layer may contain one or more materials selected from a solid electrolyte composed of at least Li, Zr, and O, a solid electrolyte having a $\gamma$-$Li_3VO_4$ structure, and an oxide glass ceramic-based lithium ion conductor. Examples of the solid electrolyte composed of at least Li, Zr, and O include $Li_2ZrO_3$.

Examples of the solid electrolyte having a $\gamma$-$Li_3VO_4$ structure include a solid electrolyte having an average chemical composition represented by the following general formula (II).

$$[\text{Chemical Formula 2}] \ (Li_{[3-ax+(5-c)(1-y)]}A_x)(B_yC_{1-y})O_4 \qquad \text{(II)}$$

In the formula (II), A is one or more elements selected from the group consisting of Na, K, Mg, Ca, Al, Ga, Zn, Fe, Cr, and Co,

B is one or more elements selected from the group consisting of V and P,
C is one or more elements selected from the group consisting of Zn, Al, Ga, Si, Ge, Sn, As, Ti, Mo, W, Fe, Cr, and Co,
x satisfies $0 \leq x \leq 1.0$, particularly satisfies $0 \leq x \leq 0.2$,
y satisfies $0 \leq y \leq 1.0$, particularly satisfies $0.20 \leq y \leq 0.50$,
a is an average valence of A. The average valence of A is, for example, a value represented by (n1 $\times$ a + n2 $\times$ b + n3 $\times$ c)/(n1 + n2 + n3) when A is recognized as n1 of elements X having a valence a+, n2 of elements Y having a valence b+, and n3 of elements Z having a valence c+.

c is an average valence of C. The average valence of C is, for example, the same value as the average valence of A described above when C is recognized as n1 of elements X having a valence a+, n2 of elements Y having a valence b+, and n3 of elements Z having a valence c+.

Specific examples of the solid electrolyte having a $\gamma$-$Li_3VO_4$ structure include $Li_{3.2}(V_{0.8}Si_{0.2})O_4$, $Li_{3.5}(V_{0.5}Ge_{0.5})O_4$, $Li_{3.4}(P_{0.6}Si0.4)O_4$, and $Li_{3.5}(P_{0.5}Ge_{0.5})O_4$.

As the oxide glass ceramic-based lithium ion conductor, for example, a phosphoric acid compound containing lithium, aluminum, and titanium as constituent elements (LATP), and a phosphoric acid compound containing lithium, aluminum, and germanium as constituent elements (LAGP) may be used.

The solid electrolyte layer may further contain, for example, a sintering aid and the like in addition to the solid electrolyte.

As the sintering aid in the solid electrolyte layer, the same compound as the sintering aid in the positive electrode layer may be used.

The proportion by volume of the sintering aid in the solid electrolyte layer is not particularly limited, and is preferably 0.10% or more and 20% or less, and more preferably 1% or more and 10% or less, from the viewpoint of further improving the ion conductivity and further inhibiting Li dendrite growth.

The thickness of the solid electrolyte layer is usually 0.1 to 30 um and is preferably 1 to 20 um from the viewpoint of further improving the ion conductivity and further inhibiting Li dendrite growth. As the thickness of the solid electrolyte layer, an average value of thicknesses measured at any 10 points in an SEM image is used.

In the solid electrolyte layer, the porosity is not particularly limited, and is preferably 20% or less, more preferably 15% or less, and still more preferably 10% or less from the viewpoint of further improving the ion conductivity and further inhibiting Li dendrite growth.

As the porosity of the solid electrolyte layer, a value measured by the same method as the porosity of the positive electrode layer is used.

[Method for Producing Solid-State Battery]

The solid-state battery may be produced, for example, by a so-called green sheet method, a printing method, or a method combining these methods.

The green sheet method will be described.

First, a solvent, a binder, and the like are appropriately mixed with a positive electrode active material to prepare a paste. The paste is applied onto a sheet and dried to form a first green sheet for forming a positive electrode layer. The first green sheet may contain a solid electrolyte, a conductive material, and/or a sintering aid.

A solvent, a binder, and the like are appropriately mixed with a negative electrode active material to prepare a paste. The paste is applied onto a sheet and dried to form a second green sheet for forming a negative electrode layer. The second green sheet may contain a solid electrolyte, a conductive material, and/or a sintering aid.

A solvent, a binder, and the like are appropriately mixed with a solid electrolyte to prepare a paste. The paste is applied onto a sheet and dried to form a third green sheet for forming a solid electrolyte layer. The third green sheet may contain a sintering aid and the like.

The solvent and the binder for preparing the first to third green sheets may be selected from the same ranges as the solvent and the binder described in the description of the method for producing the solid electrolyte ceramic material, respectively.

Next, the first to third green sheets are appropriately stacked to produce a stacked body. The produced stacked body may be pressed. Examples of a preferable pressing method include an isostatic pressing method.

Thereafter, the stacked body is sintered at, for example, 600 to 800°C to obtain a solid-state battery.

The printing method will be described.

The printing method is the same as the green sheet method except for the following points.

· An ink for each layer having the same composition as the composition of the paste for each layer for obtaining a green sheet is prepared except that the blending amounts of the solvent and the resin are adjusted to those suitable for use as the ink.

· The ink for each layer is printed and stacked to produce a stacked body.

Hereinafter, the present invention will be described in more detail based on specific examples, but the present invention is not limited to the following examples at all and may be appropriately changed and implemented without changing the gist thereof.

EXAMPLES

<Examples 1 to 9 and Comparative Examples 1 to 4>

[Production of Material]

Core particles and shell layers for producing solid electrolyte ceramic materials were produced.

(Production of Core Particles 1 to 7)

As core particles 1 to 7, a garnet-type solid electrolyte powder was produced as follows.

As raw materials, lithium hydroxide monohydrate $LiOH \cdot H_2O$, lanthanum hydroxide $La(OH)_3$, zirconium oxide $ZrO_2$, tantalum oxide $Ta_2O_5$, niobium oxide $Nb_2O_5$, molybdenum oxide $MoO_3$, gallium oxide $Ga_2O_3$, and aluminum oxide $Al_2O_3$ were used.

Each raw material was weighed to have the chemical composition of the core particle 1 shown in Table 1, water was added thereto, the resulting mixture was sealed in a 100 ml polyethylene pot and rotated at 150 rpm for 16 hours on a pot rack to mix the raw materials. Lithium hydroxide monohydrate $LiOH \cdot H_2O$ as a Li source was charged in an excess of 3 wt% with respect to the target composition in consideration of Li deficiency during sintering. Table 1 includes Table 1A and Table 1B.

The obtained slurry was evaporated and dried, and then calcined at 900°C for 5 hours to obtain a target phase.

A mixed solvent of toluene and acetone was added to the obtained calcined powder, and the obtained material was pulverized with a planetary ball mill for 6 hours.

The pulverized powder was dried to obtain a solid electrolyte powder. The powder was confirmed to have no compositional deviation through ICP measurement. The average particle size of the core particles at this time was 150 nm.

In Examples and Comparative Examples, the primary particle size of the material was not changed, and the structure and composition were controlled by the composition, molar ratio, and firing time of the core phase and the shell phase.

(Production of powders in which core particles are coated with shell layers 1 to 9)

Powders in which core particles were coated with garnet-type solid electrolytes as shell layers 1 to 9 were produced as follows.

As raw materials, lithium nitrate $LiNO_3$, lanthanum nitrate hexahydrate $La(NO_3)_3 \cdot 6H_2O$, bismuth nitrate pentahydrate $Bi(NO_3)_3 \cdot 5H_2O$, aluminum (III) isopropoxide $Al(OC_3H_7)_3$, gallium (III) isopropoxide $Ga(OC_3H_7)_3$, niobium (V) ethoxide $Nb(OC_2H_5)_5$, tantalum (V) ethoxide $Nb(OC_2H_5)_5$, molybdenum (V) ethoxide $Mo(OC_2H_5)_5$, and ethyl acetoacetate were used. Each material was weighed to satisfy the molar ratio of shell layer/core particles and the chemical composition of the shell layer shown in Table 1. Ethyl acetoacetate was weighed to be 4 times the molar amount of each alkoxide. First, each alkoxide and ethyl acetoacetate were placed in a glass container and stirred for 30 minutes using a stirrer piece (solution A). Next, each nitrate and 2-methoxyethanol was placed in a glass container to dissolve the nitrate (solution B). The solution A was added dropwise little by little to the solution B to produce a uniform solution C. The predetermined core particles were mixed into the solution C and then mixed using a stirrer piece for 5 hours, and then the solvent was evaporated at 100°C. The obtained dry powder was subjected to a heat treatment at 700°C for 5 hours to obtain a garnet-type solid electrolyte powder having a shell layer on core particles.

In addition, only the solution C was dried and then subjected to a heat treatment at 700°C for 5 hours to obtain a shell layer powder. It was confirmed that the garnet-type solid electrolyte single substance was obtained through XRD measurement of the shell layer powder. Further, it was confirmed that the powder had no compositional deviation in the shell layer through ICP measurement.

[Production of solid electrolyte single plate]

As a sample for evaluation of a solid electrolyte ceramic material, a solid electrolyte single plate was produced by the following method.

The powder obtained in "Production of powders in which core particles are coated with shell layers 1 to 9" was weighed, and kneaded with a butyral resin, an alcohol and a binder to produce a slurry.

The slurry was sheet-molded on a PET film using a doctor blade method to obtain a sheet. The produced sheet was stacked until the thickness of the sheet reached 500 um, and then the sheet was cut into a square shape having a size of 10 mm × 10 mm, sandwiched between two porous setters, the binder was removed at 400°C, and then the sheet was subjected to press sintering at 850 to 950°C for 60 to 600 minutes under a pressure of 100 MPa to produce a solid electrolyte single plate. The porosity of the solid electrolyte single plate was 10% or less, and it was confirmed that sintering sufficiently proceeded. It was also confirmed that there was no difference in the grain size of the grains constituting the solid electrolyte ceramic in each sample.

[Table 1A]

| | Type and chemical composition of core particle | Type and chemical composition of shell layer | Molar ratio (shell layer/ core particle) | Firing condition | |
|---|---|---|---|---|---|
| | | | | Firing temperature (°C) | Firing time (min) |
| Example 1 | Core particle 1 (Li6.4Ga0.05Al0.15) La3Zr2O12 | Shell layer 1 (Li6.05Ga0.05Al0.15)La3 (Zr1.65Bi0.35)O12 | 0.25 | 850 | 120 |
| Example 2 | Core particle 1 (Li6.4Ga0.05Al0.15) La3Zr2O12 | Shell layer 1 (Li6.05Ga0.05Al0.15)La3 (Zr1.65Bi0.35)O12 | 0.25 | 850 | 240 |
| Example 3 | Core particle 1 (Li6.4Ga0.05Al0.15) La3Zr2O12 | Shell layer 1 (Li6.05Ga0.05Al0.15)La3 (Zr1.65Bi0.35)O12 | 0.25 | 850 | 600 |
| Example 4 | Core particle 1 (Li6.4Ga0.05Al0.15) La3Zr2O12 | Shell layer 2 (Li5.95Ga0.05Al0.15)La3 (Zr1.45Bi0.55)O12 | 0.33 | 850 | 120 |
| Example 5 | Core particle 1 (Li6.4Ga0.05Al0.15) La3Zr2O12 | Shell layer 2 (Li5.95Ga0.05Al0.15)La3 (Zr1.45Bi0.55)O12 | 0.33 | 850 | 240 |
| Example 6 | Core particle 1 (Li6.4Ga0.05Al0.15) La3Zr2O12 | Shell layer 3 (Li6.2Ga0.05Al0.15)La3 (Zr1.8Bi0.2)O12 | 0.25 | 850 | 240 |
| Example 7 | Core particle 2 Li6.6La3 (Zr1.6Ta0.4)O12 | Shell layer 4 Li6.4La3 (Zr1.4Ta0.4Bi0.2)O12 | 0.25 | 950 | 120 |
| Example 8 | Core particle 3 Li6.75La3 (Zr1.75Nb0.25)O12 | Shell layer 5 Li6.55La3 (Zr1.55Nb0.25Bi0.2)O12 | 0.25 | 950 | 120 |
| Example 9 | Core particle 4 Li6.6La3 (Zr1.8Mo0.2)O12 | Shell layer 6 Li6.4La3 (Zr1.6Mo0.2Bi0.2)O12 | 0.25 | 950 | 120 |

[Table 1B]

| | Type and chemical composition of core particle | Type and chemical composition of shell layer | Molar ratio (shell layer/ core particle) | Firing condition | |
|---|---|---|---|---|---|
| | | | | Firing temperature (°C) | Firing time (min) |
| Comparative Example 1 | Core particle 5 (Li6.10Ga0.05Al0.15)La3 (Zr1.70Bi0.30)O12 | Shell layer 7 (Li6.10Ga0.05Al0.15)La3 (Zr1.70Bi0.30)O12 | 0.25 | 850 | 120 |
| Comparative Example 2 | Core particle 6 (Li6.33Ga0.05Al0.15)La3 (Zr1.93Bi0.07)O12 | Shell layer 8 (Li6.33Ga0.05Al0.15)La3 (Zr1.93Bi0.07)O12 | 0.25 | 850 | 240 |
| Comparative Example 3 | Core particle 7 (Li6.4Ga0.05Al0.15) La3Zr2O12 | Shell layer 9 (Li6.2Ga0.05Al0.15)La3 (Zr1.8Nb0.2)O12 | 0.25 | 950 | 120 |

(continued)

| | Type and chemical composition of core particle | Type and chemical composition of shell layer | Molar ratio (shell layer/ core particle) | Firing condition | |
|---|---|---|---|---|---|
| | | | | Firing temperature (°C) | Firing time (min) |
| Comparative Example 4 | Core particle 7 (Li6.4Ga0.05Al0.15) La3Zr2O12 | Shell layer 9 (Li6.2Ga0.05Al0.15)La3 (Zr1.8Ta0.2)O12 | 0.25 | 950 | 120 |

[Evaluation]

The solid electrolyte single plates of Examples/Comparative Examples were evaluated as follows.

(Ion conductivity measurement: Li ion conductivity)

An Au electrode was formed on both surfaces of each solid electrolyte single plate by sputtering. Thereafter, measurement was performed at 25°C and 10 MHz to 0.1 Hz using an AC impedance method to calculate the ion conductivity (I) of the total of the solid electrolyte including grain boundaries and grain interiors.

⊙⊙: $1.7 \times 10^{-3}$ S/cm ≤ I (best);
⊙: $1.5 \times 10^{-3}$ S/cm ≤ I < $1.7 \times 10^{-3}$ S/cm (good)
○; $1.0 \times 10^{-3}$ S/cm ≤ I < $1.5 \times 10^{-3}$ S/cm (acceptable) (has no practical problem);
×; I < $1.0 \times 10^{-3}$ S/cm (not acceptable) (has a practical problem).

(Li-symmetric cell constant current cycle test: Li dendrite growth inhibition property)

Li metal was attached to both surfaces of the solid electrolyte single plate, and then a Li/solid electrolyte/Li symmetric cell was constructed through warm isostatic pressing. Thereafter, Li of 1 mAh was deposited on one side by applying a current density of 500 μA/cm$^2$, and then Li of 1 mAh was deposited on the counter electrode side by applying a reverse current. This cycle was repeated five times. When the cell did not have a short circuit after five cycles, the current density was increased to 1 mA/cm$^2$, and the same cycle was performed. When the cell did not have a short circuit after five cycles at 1 mA/cm$^2$, the current density was increased to 1.5 mA/cm$^2$, and the same cycle was performed. When the cell did not have a short circuit after five cycles at 1.5 mA/cm$^2$, the current density was increased to 2 mA/cm$^2$, and the same cycle was performed. The maximum current density at which the cell operated without a short circuit was defined as a critical current density (CCD).

⊙⊙: 2.00 mA/cm$^2$ ≤ CCD (best);
⊙: 1.50 mA/cm$^2$ ≤ CCD < 2.00 mA/cm$^2$ (good);
○; 1.00 mA/cm$^2$ ≤ CCD < 1.50 mA/cm$^2$ (acceptable) (has no practical problem);
×; CCD < 1.00 mA/cm$^2$ (not acceptable) (has a practical problem).

[Measurement]

(Bi amount (x1) in vicinity of grain boundary)

The solid electrolyte single plate was processed into a thin piece by FIB treatment, and then quantitative analysis (composition analysis) was performed by point analysis at any 20 points in the vicinity of grain boundaries of each of any 10 sintered particles by EDX using TEM-EDX (energy dispersive X-ray spectroscopy) to obtain a ratio of Bi/M in the vicinity of grain boundaries. The Bi amount x in the general formula (I) was calculated from the Bi/M ratio in the vicinity of grain boundaries, and the amount was taken as the Bi amount (x1) of the vicinity of grain boundaries.

(Bi amount (x2) in grain interior)

The solid electrolyte single plate was processed into a thin piece by FIB treatment, and then quantitative analysis (composition analysis) was performed by point analysis at any 20 points in the particle interior of each of any 10 sintered particles by EDX using TEM-EDX (energy dispersive X-ray spectroscopy) to obtain a ratio of Bi/M in the particle interior. The Bi amount x in the general formula (I) was calculated from the Bi/M ratio of the particle interior, and the amount was taken as the Bi amount (x2) in the grain interior.

(Average chemical composition and average Bi amount (x3) of whole solid electrolyte single plate)

The solid electrolyte single plate was subjected to ICP analysis to obtain the average chemical composition of the solid electrolyte single plate. The Bi amount x in the average chemical composition of the whole solid electrolyte single plate was determined as the average Bi amount (x3) of the whole solid electrolyte single plate.

(Average grain size)

For the average grain size of the sintered grains constituting the solid electrolyte ceramic material, a particle analysis was performed using a TEM image and image analysis software (for example, "Azo-kun" (manufactured by Asahi Kasei Engineering Corporation)), and the equivalent circle diameter was calculated to determine the average grain size of any 100 grains.

(Crystal structure near grain boundary)

The solid electrolyte single plate was processed into a thin piece by FIB treatment, and the grain boundary part and the grain interior of Examples 1 to 9 and Comparative Examples 1 to 4 were observed by TEM analysis. From the electron diffraction measurement, it was confirmed that amorphous was not confirmed at the grain boundary part, and an electron diffraction image attributable to a cubic-garnet-type structure was obtained in both the vicinity of grain boundaries and the grain interior.

[Table 2]

| | Average chemical composition | Bi amount in vicinity of grain boundary (x1) | Bi amount in grain interior (x2) | x1 ·x2 | Average (Bi, Nb, Ta) amount (x3) | Ion conductivity (S/cm) | Evaluation | CCD (mA/cm2) | Evaluation | Total evaluation |
|---|---|---|---|---|---|---|---|---|---|---|
| Comparative Example 1 | (Li6.10Ga0.05A10.15) La 3(Zr1.70Bi0.30)O12 | 0.30 | 0.30 | 0 | 0.30 | $7.0 \times 10^{-4}$ | × | 1.00 | ○ | × |
| Comparative Example 2 | (Li6.33Ga0.05A10.15) La 3(Zr1.93Bi0.07)O12 | 0.07 | 0.07 | 0 | 0.07 | $1.2 \times 10^{-3}$ | ○ | 0.50 | × | × |
| Example 1 | (Li6.33Ga0.05A10.15) La 3(Zr1.93Bi0.07)O12 | 0.30 | 0.02 | 0.28 | 0.07 | $1.7 \times 10^{-3}$ | ⊙⊙ | 1.00 | ○ | ○ |
| Comparative Example 3 | (Li6.33Ga0.05A10.15) La 3(Zr1.93Nb0.07) O12 | 0.12 [1] | 0.05[1] | 0.07 | 0.07[1] | $1.4 \times 10^{-3}$ | ○ | 0.50 | × | × |
| Comparative Example 4 | (Li6.33Ga0.05A10.15) La 3(Zr1.93Ta0.07) O12 | 0.12[2] | 0.05[2] | 0.07 | 0.07[2] | $1.4 \times 10^{-3}$ | ○ | 0.50 | × | × |

Comparative Examples 1 and 2 are uniform systems in which Bi is not concentrated at grain boundaries.

Comparison between Comparative Examples 1 and 2 and Example 1 made clear the effect of improving ion conductivity by Bi concentration and the effect of inhibiting Li dendrite growth in the present invention.

Specifically, from Comparative Example 2, it was found that in a system in which the Bi amount is equal in the vicinity of grain boundaries and in the grain interior, when x = 0.07, a relatively high ionic conductivity is obtained, but the CCD is low, and the cell easily has a short circuit. In addition, in Comparative Example 1 in which the amount of Bi was increased, it was found that a high CCD was obtained, but the ionic conductivity was significantly reduced.

On the other hand, in Example 1 in which the average amount of Bi was equal to that in Comparative Example 2 but the amount of Bi in the vicinity of grain boundaries was increased, it was found that both high ionic conductivity and high CCD were achieved. This is considered to be because since the amount of Bi in the vicinity of grain boundaries was large, an effect of inhibiting Li dendrite growth was exhibited, and since the amount of Bi in the grain interior was small, high ionic conductivity was obtained.

Comparative Examples 3 and 4 are examples in which the element concentrated at grain boundaries is changed to Nb or Ta instead of Bi.

Comparison between Comparative Examples 3 and 4 and Example 1 made clear the effect of inhibiting Li dendrite growth based on the fact that the concentrated element is Bi in the present invention.

Specifically, in Comparative Examples 3 and 4 in which the amount of Nb or Ta having the same valence as Bi was increased in the vicinity of grain boundaries, the CCD did not improve. This is considered to be because Nb and Ta are less likely to be reduced when they contact Li as compared with Bi, and there is almost no change in the lattice volume when they contact Li, and therefore no compressive stress worked.

From the above, it is clear that changing the amount of Bi which tends to be reduced appropriately and has a large change in the ionic radius when reduced is effective for achieving both the effect of improving the ion conductivity and the effect of inhibiting Li dendrite growth.

[Table 3]

| | Average chemical composition | Bi amount in vicinity of grain boundary (x1) | Bi amount in grain interior (x2) | x1 ·x2 | Average Biamount (x3) | Ion conductivity (S/cm) | Evaluation | CCD (mA/cm2) | Evaluation | Total evaluation |
|---|---|---|---|---|---|---|---|---|---|---|
| Example 1 | $(Li_{6.33}Ga_{0.05}Al_{0.15})La_3(Zr_{1.93}Bi_{0.07})O_{12}$ | 0.30 | 0.02 | 0.28 | 0.07 | $1.7 \times 10^{-3}$ | ⊙⊙ | 1.00 | ○ | ○ |
| Example 2 | $(Li_{6.33}Ga_{0.05}Al_{0.15})La_3(Zr_{1.93}Bi_{0.07})O_{12}$ | 0.14 | 0.04 | 0.10 | 0.07 | $1.7 \times 10^{-3}$ | ⊙⊙ | 2.00 | ⊙⊙ | ⊙⊙ |
| Example 3 | $(Li_{6.33}Ga_{0.05}Al_{0.15})La_3(Zr_{1.93}Bi_{0.07})O_{12}$ | 0.10 | 0.06 | 0.04 | 0.07 | $1.5 \times 10^{-3}$ | ⊙ | 1.50 | ⊙ | ⊙ |
| Example 4 | $(Li_{6.26}Ga_{0.05}Al_{0.15})La_3(Zr_{1.86}Bi_{0.14})O_{12}$ | 0.48 | 0.08 | 0.40 | 0.14 | $1.1 \times 10^{-3}$ | ○ | 1.00 | ○ | ○ |
| Example 5 | $(Li_{6.26}Ga_{0.05}Al_{0.15})La_3(Zr_{1.86}Bi_{0.14})O_{12}$ | 0.22 | 0.10 | 0.12 | 0.14 | $1.2 \times 10^{-3}$ | ○ | 1.50 | ⊙ | ○ |
| Example 6 | $(Li_{6.36}Ga_{0.05}Al_{0.15})La_3(Zr_{1.96}Bi_{0.04})O_{12}$ | 0.09 | 0.02 | 0.07 | 0.04 | $1.9 \times 10^{-3}$ | ⊙⊙ | 1.00 | ○ | ○ |

Examples 1 to 3 are examples in which the amount of Bi in the vicinity of grain boundaries and the amount of Bi in the grain interior are changed by changing the type of core particles and the firing conditions to have the same average chemical composition and changing the degree of progress of Bi diffusion.

Examples 4 to 5 are examples in which the amount of Bi in the vicinity of grain boundaries and the amount of Bi in the grain interior are changed by changing the type of core particles and firing conditions and the progress of Bi diffusion is changed to have the average chemical composition that are different from the average chemical compositions of Examples 1 to 3.

Comparison between Example 1 and Examples 2 to 3 and comparison between Example 4 and Example 5 shows that when the Bi amount x1 in the vicinity of grain boundaries increases within the allowable range of the present invention, the CCD tends to decrease within the allowable range of the present invention. This is considered to be because when the amount of Bi in the vicinity of grain boundaries increases, the change in lattice constant becomes large within the allowable range of the present invention when Bi in the garnet-type solid electrolyte is reduced, and therefore it becomes difficult to maintain the garnet-type crystal structure and to inhibit Li dendrite growth.

From Example 6, it was shown that the CCD tends to decrease when the Bi amount x1 in the vicinity of grain boundaries decreases within the allowable range of the present invention. This is considered to be because the amount of change in lattice constant when Bi in the garnet-type solid electrolyte in the vicinity of grain boundaries is reduced decreases within the allowable range of the present invention due to the decrease in the amount of Bi, and therefore the compressive stress decreases.

From the above, it was found that the Bi amount x1 in the vicinity of grain boundaries preferably satisfies $0.05 \leq x_1 \leq 0.20$ and more preferably satisfies $0.11 \leq x_1 \leq 0.17$ from the viewpoint of further improving the ion conductivity and further inhibiting Li dendrite growth.

In addition, it was found that it is preferable that the Bi amount x1 in the vicinity of grain boundaries satisfy the above range, and the Bi amount x2 in the grain interior satisfy $0.03 \leq x_2 \leq 0.07$, and it is more preferable that the Bi amount x1 in the vicinity of grain boundaries satisfy the above range, and the Bi amount x2 in the grain interior satisfy $0.03 \leq x_2 \leq 0.05$, from the viewpoint of further improving the ion conductivity and further inhibiting Li dendrite growth.

[Table 4]

| | Average chemical composition | Bi amount in vicinity of grain boundary (x1) | Bi amount in grain interior (x2) | x1 ·x2 | Average Bi amount (x3) | Ion conductivity (S/cm) | Evaluation | CCD (mA/cm2) | Evaluation | Total evaluation |
|---|---|---|---|---|---|---|---|---|---|---|
| Example 7 | Li6.53La3 (Zr1.53Ta0.4B 10.07)012 | 0.14 | 0.05 | 0.09 | 0.07 | $1.1 \times 10^{-3}$ | ○ | 1.50 | ⊙ | ○ |
| Example 8 | Li6.68La3 (Zr1.68Nb0.25 Bi0.07)O12 | 0.12 | 0.06 | 0.06 | 0.07 | $1.0 \times 10^{-3}$ | ○ | 1.50 | ⊙ | ○ |
| Example 9 | Li6.53La3 (Zr1.73Mo0.2B 10.07)012 | 0.12 | 0.06 | 0.06 | 0.07 | $1.0 \times 10^{-3}$ | ○ | 1.00 | ○ | ○ |

From Examples 7 to 9, it was found that as the amount of Bi increases in the vicinity of grain boundaries, high CCD and high ionic conductivity can be obtained in a garnet-type solid electrolyte having various compositions.

INDUSTRIAL APPLICABILITY

The solid-state battery including the solid electrolyte ceramic material of the present invention can be used in various fields where battery use or power storage is assumed. Although it is merely an example, the solid-state battery according to an embodiment of the present invention can be used in the field of electronics mounting. The solid-state battery according to an embodiment of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

**Claims**

1. A solid electrolyte ceramic material formed by sintering solid electrolyte particles, the solid electrolyte ceramic material comprising, at least, lithium (Li), lanthanum (La), bismuth (Bi), and oxygen (O), wherein Bi has a higher concentration in a vicinity of grain boundaries than in a grain interior.

2. The solid electrolyte ceramic material according to claim 1, wherein the solid electrolyte ceramic material has a garnet-type crystal structure.

3. The solid electrolyte ceramic material according to claim 2, wherein

   in the solid electrolyte ceramic material having a garnet-type crystal structure, Bi occupies a six-coordination site in the garnet-type crystal structure, and
   when twice an amount of a molar ratio of Bi in the six-coordination site is defined as a Bi amount x, a relational expression shown below is satisfied:

$$x_2 < x_1$$

   where $x_1$ is the Bi amount x in the vicinity of grain boundaries and $x_2$ is the Bi amount x in the grain interior.

4. The solid electrolyte ceramic material according to claim 3, wherein the Bi amount $x_1$ in the vicinity of grain boundaries and the Bi amount $x_2$ in the grain interior satisfy relational expressions of Embodiment p1 shown below:
   Embodiment p1:

$$0 < x_1 \leq 0.80;$$

   and

$$0 \leq x_2 \leq 0.30.$$

5. The solid electrolyte ceramic material according to claim 3 or 4, wherein the Bi amount $x_1$ in the vicinity of grain boundaries and the Bi amount $x_2$ in the grain interior satisfy a relational expression of Embodiment q1 shown below:
   Embodiment q1:

$$0.01 \leq x_1 - x_2.$$

6. The solid electrolyte ceramic material according to any of claims 1 to 5, wherein the solid electrolyte ceramic material further includes zirconium (Zr).

7. The solid electrolyte ceramic material according to any of claims 1 to 6, wherein Bi contained in the solid electrolyte ceramic material is present in a pentavalent form.

8. The solid electrolyte ceramic material according to any of claims 1 to 7, wherein the solid electrolyte ceramic material has, as a whole of the material, an average chemical composition represented by the general formula (I) shown below:

[Chemical Formula 1] $(Li_{[7-ay-(b-4)(2-x)-x+(3-c)z]}A_y)(La_{3-z}C_z)(M_{2-x}Bi_x)O_{12}$ ( I )

wherein

A is one or more elements selected from the group consisting of gallium (Ga), aluminum (Al), magnesium (Mg), zinc (Zn), and scandium (Sc);
M is one or more elements selected from the group consisting of zirconium (Zr), tantalum (Ta), niobium (Nb), molybdenum (Mo), tungsten (W), and tellurium (Te);
C is one or more elements selected from the group consisting of calcium (Ca), strontium (Sr), barium (Ba), and lanthanoid elements;
x satisfies $0 < x \leq 0.5$;
y satisfies $0 \leq y \leq 0.5$;
z satisfies $0 < z \leq 2$;
a is an average valence of A;
b is an average valence of M; and
c is an average valence of C.

9. The solid electrolyte ceramic material according to claim 8, wherein in the general formula (I), M contains Zr.

10. The solid electrolyte ceramic material according to any of claims 1 to 9, wherein the solid electrolyte ceramic material is contained in a solid-state battery.

11. The solid electrolyte ceramic material according to claim 10, wherein

the solid-state battery includes a positive electrode layer, a negative electrode layer, and a solid electrolyte layer stacked between the positive electrode layer and the negative electrode layer, and
the positive electrode layer and the negative electrode layer are layers capable of occluding and releasing lithium ions.

12. The solid electrolyte ceramic material according to claim 10 or 11, wherein the solid electrolyte ceramic material is contained in the solid electrolyte layer of the solid-state battery.

13. A solid-state battery comprising the solid electrolyte ceramic material according to any of claims 1 to 12.

14. The solid-state battery according to claim 13, wherein

the solid-state battery includes a positive electrode layer, a negative electrode layer, and a solid electrolyte layer stacked between the positive electrode layer and the negative electrode layer, and
the positive electrode layer and the negative electrode layer are layers capable of occluding and releasing lithium ions.

15. The solid-state battery according to claim 14, wherein the solid electrolyte layer and the positive electrode layer, and the solid electrolyte layer and the negative electrode layer are integrally sintered with each other as sintered bodies.

16. The solid-state battery according to any of claims 13 to 15, wherein the solid electrolyte ceramic material is contained in the solid electrolyte layer of the solid-state battery.

FIG. 1

FIG. 2

## INTERNATIONAL SEARCH REPORT

International application No.

**PCT/JP2021/018658**

| A. | CLASSIFICATION OF SUBJECT MATTER |
|---|---|

*H01M 4/13*(2010.01)i; *H01M 4/62*(2006.01)i; *H01M 10/052*(2010.01)i; *H01M 10/0562*(2010.01)i;
*H01M 10/0585*(2010.01)i; *H01B 1/06*(2006.01)i; *H01B 1/08*(2006.01)i; *C04B 35/50*(2006.01)i
FI: H01B1/06 A; H01M10/052; H01M10/0585; H01M4/62 Z; H01M4/13; H01B1/08; C04B35/50; H01M10/0562

According to International Patent Classification (IPC) or to both national classification and IPC

| B. | FIELDS SEARCHED |
|---|---|

Minimum documentation searched (classification system followed by classification symbols)

H01M4/13; H01M4/62; H01M10/052; H01M10/0562; H01M10/0585; H01B1/06; H01B1/08; C04B35/50

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-068076 A (SEIKO EPSON CORP.) 30 April 2020 (2020-04-30) paragraphs [0022], [0025]-[0033] | 1-3, 6, 10-16 |
| A | | 4-5, 7-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/018658**

| Patent document cited in search report | | | Publication date (day/month/year) | Patent family member(s) | Publication date (day/month/year) |
|---|---|---|---|---|---|
| JP | 2020-068076 | A | 30 April 2020 | US 2020/0127326 A1 paragraphs [0003], [0041]-[0050] | |

Form PCT/ISA/210 (patent family annex) (January 2015)

**EP 4 156 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015050071 A

**Non-patent literature cited in the description**

- **S. OHTA.** *frontiers in Energy Research,* 2016, vol. 4, 30